# EUROPEAN PATENT SPECIFICATION

(11) **EP 0 953 090 B1**
(45) Date of publication and mention of the grant of the patent: **03.04.2002**
(21) Application number: 98900904.8
(22) Date of filing: 16.01.1998
(51) Int. Cl.: E04D 11/02, E04D 5/10

(54) **COMPOSITE ROOF SYSTEM**
DACHBAUWEISE
TOIT COMPOSITE

(30) Priority: 20.01.1997 GB 9701092; 12.06.1997 GB 9712300
(43) Date of publication of application: 03.11.1999
(73) Proprietor: Rockwool Limited, Mid Glamorgan CR35 6NY Wales (GB)
(72) Inventor: FRANCIS, Kenneth, Ian, Nr. Bridgend Mid Glamorgan CF35 5DS (GB); CODY, Lawrence, Windsor, Barry South Glamorgan CF62 6SL (GB); OSMOND, Christopher, Thornhill South Glamorgan CF4 9EK (GB)
(74) Representative: Samuels, Lucy Alice
(86) International application number: GB9800145
(87) International publication number: WO9831895

(56) References cited:
- DE-A- 2 925 511
- DE-A- 3 246 573
- GB-A- 2 155 854
- GB-A- 2 161 749
- GB-A- 2 289 436

## Description

The present invention relates to a flat roof composite comprising a resin-impregnated mineral fibre layer, a fabric layer with impregnated adhesive throughout the layer, the adhesive penetrating also into the surface of the mineral fibre layer, and a moisture (i.e. liquid water) impermeable sheet adhered to the scrim layer by the adhesive.

### Background of the Invention

Flat roofs are primarily formed by one of two systems. The main system was molten bitumen applied over roofing felt, with mineral chippings applied on top to provide some protection from the effect of the sun's radiation. This well tested system is successful and has a long life but does require maintenance. The other system uses a sheet of moisture/water impermeable material extending across the roof. The material may be mechanically secured to the underlying substrate by appropriate fixings, or alternatively may be adhered over its whole area to the underlying substrate. This is known as a fully adhered system.

This is carried out on site by applying adhesive to the underside of the impermeable sheet and/or the top surface of the substrate in situ on the roof to form a composite. The use of rigid mineral fibre boards, formed by impregnating a board shaped slab of mineral fibre with a resin containing impregnant liquid in a bath, for the roof is known and provides excellent mechanical, thermal and sound insulating properties.

It is also known to apply a layer of mineral fibre, for instance glass fibre, tissue across the mineral fibre boards whereby it is sandwiched between the board and the impermeable sheet. A panel formed of several boards arranged side-by-side may have a layer of tissue extending across its entire area. The tissue is adhered to the board(s) by adhesive applied between the contacting surfaces. The tissue holds the boards in position in the panel and may improve the mechanical strength by enabling forces exerted on one board to be transferred to the adjacent board. The tissue has small pores, for instance having average pore size, or distance between adjacent fibres of less than 0.5 mm, for instance as little as 0.1 mm.

When the tissue-mineral fibre board panel is used as a substrate for a fully adhered system the adhesion to the moisture/water impermeable sheet may be unsatisfactory. This problem can be qualified by measurement of the peel strength of the moisture/water impermeable sheet from the composite. The present inventors believe that this is due to an inadequate transfer of forces from the impermeable sheet to the mineral fibre board. The present invention solves that problem.

### Relevant Prior Art

US-A-4707961 describes the adhesion of an impermeable sheet to a mineral board (plasterboard/dry wall).

GB-A-1587270 a mineral fibre board used as a roof substrate has a glass fibre fabric which extends across its surface, the two layers being united by passing the glass fabric through a bath of resin-containing liquid and curing resin. The laminated board is used as a substrate for the application of bitumen, and the incorporation of this fabric is said to provide reinforcement for the mineral fibre board and to reduce the amount of bitumen used. The intention therefore appears to be to reduce the extent to which molten bitumen penetrates into the mineral fibre layer.

DE-A-29 25 511 describes the adhesion of an impermeable sheet to an insulating core of foam material.

### Summary of the Invention

A new roofing system according to the present invention comprises a mineral fibre core, a fabric overlying the core and united to the core by a resin to form a panel and a moisture/water impermeable (i.e. impermeable to water as a liquid, preferably also as vapour) sheet overlying the fabric, which is joined to the panel by adhesive which penetrates into the mineral fibre core.

The fabric is characterised by being woven of strands, each of the strands being formed of filaments. The filaments may be of polymeric material, but are preferably wholly inorganic, for instance formed of glass. This optimises fire resistance.

The fabric is porous, allowing penetration throughout its thickness of liquid adhesive. The present inventors have found that an excellent combination of performance and materials usage can be achieved where the size of the openings between strands of a woven fabric is in the range 0.75 to 2.0 mm, preferably in the range 1.0 to 1.5 mm.

The density of the mineral fibre core should preferably be at least 80 kg/m³. It could also be a dual density product, where the surface could have a higher density than the lower part of the core. For instance, a higher density surface layer may have a density greater than 200 kg/m³ and a lower density core may have a density less than 180 kg/m³, for instance less than 150 kg/m³.

The fabric and mineral fibre core may be joined together by resin which penetrates both the fabric and the surface region at least of the mineral fibre core. Although it is possible for this fabric to be adhered to a resin-impregnated board formed of mineral fibre, it is preferred for the fabric and the mineral fibre core to be optimally united by laying the fabric over a slab of mineral wool before or during its passage through a bath of resin-containing liquid whereby resin impregnates both the fabric and the whole volume of the mineral wool slab, and then curing the resin to form a panel. The uniting of the fabric and the core is thus preferably part of the manufacturing process carried out prior to building site work. The panel may comprise several slabs of mineral wool joined by a single sheet of fabric.

The impermeable sheet is usually adhered to the panel on site. Thus the roof is first built in the normal way using panels having a mineral fibre core. Adhesive liquid is then applied to either or both of the impermeable sheet and the fabric surface and the impermeable sheet is laid over the fabric so that the two become adhered. In the invention it is essential that the adhesive penetrate right through the fabric and it is therefore essential that the adhesive is in liquid form when it first contacts the fabric side. Where the adhesive is a curable resin, for instance which cures on contact with air, or moisture or moisture vapour or after activator or on being heated, the liquid adhesive may be applied to only one of the fabric or impermeable layer, usually the fabric. Where the adhesive develops its adhesion by evaporation of a solvent/liquid vehicle, whereby the adhesive solidifies or gels, the liquid adhesive composite must be applied at least to the fabric, so that it can penetrate to the mineral fibre core whilst in liquid form. For one class of such adhesives, contact adhesives, the adhesive liquid should preferably be applied to both fabric and impermeable sheet and solvent allowed to evaporate at least partially, before the coated surfaces are contacted with one another.

The viscosity of the liquid adhesive is adjusted/selected so as to allow penetration to the mineral fibre core. It has been found that liquids having viscosities in the range 500 to 10,000 cps, preferably in the range 1000 to 5000 cps, measured at 20°C, have good penetration. The application rate (of liquid adhesive) is preferably in the range 100 to 700 g/m², preferably 200 to 300 g/m².

Penetration of the liquid adhesive may be increased and material usage may be minimised by the use of a foamable adhesive, for instance which foams on contact with water during or after application to the fabric.

Suitable adhesives are, for example, those typically used for fully adhered impermeable sheet attachment, for instance polyurethanes or polyacrylic or rubber contact adhesives.

The present invention gives excellent, mechanical characteristics, especially improved peel strength as compared to a comparable panel having a layer of tissue across its surface.

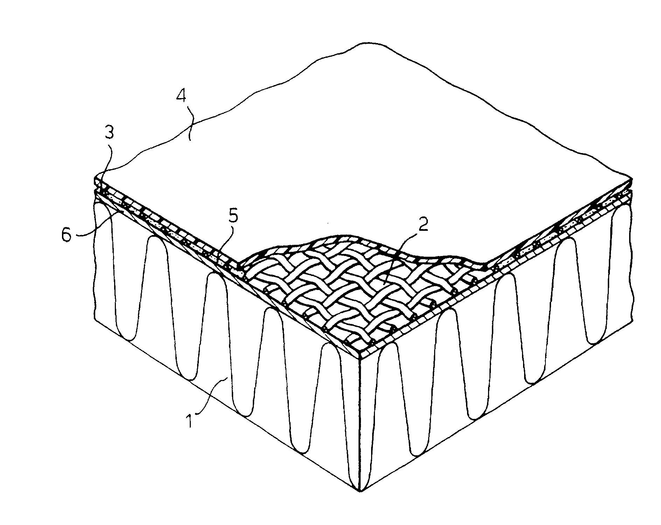

The invention is illustrated in the accompanying drawing, which is a perspective view of a portion of a roofing system showing the layers in cross section. In the figure mineral fibre core 1, for instance formed of rock wool, having a density in the range 150 to 250 kg/m³, preferably in the range 175 to 200 kg/m³, is covered by a fabric 2 formed of woven strands 3 each of many filaments of glass fibre. The spacing d between the strands is in the range 1 to 1.5 mm. Impregnated throughout the volume of the core 1 and the fabric 2 is a resin, in this case a thermoset resin which unites the core and fabric to form a panel. The fabric and core may be assembled prior to the application of resin Apparatus may be similar to that currently used to impregnate high density rock wool boards. The impregnated material is passed through an oven to cure the resin.

The fabric may be covered with a polymeric roofing material (sheet 4), for instance formed of polyethylene or poly vinyl chloride and being about 0.8 to 4 mm thick. It is adhered thereto by adhesive 5 which penetrates between the strands 3 of the fabric and into the surface layer 6 of the mineral wool core.

The improved properties of the roofing system of the invention can be seen from the following experiments. The adhesive indicated in the table below was applied by brush to the fabric of the panel described above (rock wool density 200 kg/m³) at the spreading rate recommended (200 to 300 g/m²). A polymeric roofing membrane was fitted and the adhesive allowed to cure for 7 days. Test samples of 200 by 50 mm were cut, clamped at an angle to the horizontal of about 30°. The clamp of a tensile testing machine was applied over a width of 50 mm by attachment of the moving head to the lower edge of the PVC sheet. The load was applied at a predetermined rate to test the peel strength. The results are reported in the table below.

| Adhesive Type | Test Speed mm/min | Peel Strength N/50 mm |
|---|---|---|
| Polyurethane | 500 | 150 |
| Polyurethane | 100 | 90 to 95 |
| Rubber contact | 500 | >100 |

## Claims

1. A roofing system comprising a core of insulating material (1), a fabric (2) overlying the core and united to the core by a resin to form a panel and a moisture/water impermeable sheet (4) overlying the fabric, which is joined to the panel by adhesive (5) **characterised in that** the insulating material is formed of mineral fibre and **in that** the adhesive penetrates into the mineral fibre core, and the fabric is formed of woven strands (3), each of which is formed of filaments, and the size of the openings between the strands is in the range 0.75 to 2.0 mm.

2. A roofing system according to claim 1 in which the filaments are formed of inorganic fibres.

3. A roofing system according to claim 2 in which the inorganic fibres are glass fibres.

4. A roofing system according to any of claims 1 to 3 in which the size of the openings (d) between the strands (3) is in the range 1.0 to 1.5 mm.

5. A roofing system according to any preceding claim in which the fabric (2) and mineral fibre core (1) are joined together by resin which penetrates both the fabric (2) and the surface region (b) at least of the mineral fibre core (1).

6. A roofing system according to claim 5 in which the fabric (2) and mineral fibre core (1) have been united by contacting the fabric (2) and a slab of mineral fibre containing uncured resin applied in the spinning chamber prior to curing of the resin in the curing oven.

7. A method of producing a roofing system according to any preceding claim in which a panel is laid on the roof supports with the fabric side upper most, a adhesive liquid is then applied to either or both of the impermeable sheet and the fabric surface and the impermeable sheet is laid over the fabric so that the two become adhered, whereby the adhesive penetrates the fabric, and the adhesive is allowed to solidify.

8. A method according to claim 7 in which the adhesive comprises a curable resin.

9. A method according to claim 8 in which the curable resin is applied to one surface only.

10. A method according to claim 7 in which the adhesive develops its adhesion by evaporation of a solvent/liquid vehicle, whereby the adhesive solidifies or gels, and in which liquid adhesive is applied at least to the fabric.

11. A method according to claim 10 in which the adhesive is a contact adhesive and is applied to both surfaces, solvent is allowed to evaporate and then the adhesive coated surfaces are contacted with one another.

12. A method according to any of claims 7 to 11 in which the liquid adhesive has a viscosity in the range 500 to 10,000 cps measured at 20°C.

13. A method according to claim 12 in which the viscosity is in the range 1000 to 5000 cps.

14. A method according to any of claims 7 to 13 in which the rate of application of the adhesive in the range 100-700 g/m².

## Patentansprüche

1. Bedachungssystem, umfassend einen Kern aus Isoliermaterial (1), ein Gewebe (2), das über dem Kern liegt und mit dem Kern durch ein Harz unter Bildung einer Platte vereint ist, und eine feuchtigkeits-/wasserundurchlässige Bahn (4), die über dem Gewebe liegt und mit der Platte durch einen Klebstoff (5) verbunden ist, **dadurch gekennzeichnet, daß** das Isoliermaterial aus Mineralfasern gebildet ist und der Klebstoff in den Mineralfaser-Kern eindringt und das Gewebe aus gewebten Garnsträngen (3) gebildet ist, die jeweils aus Filamenten gebildet sind, wobei die Öffnungsweite zwischen den Garnsträngen im Bereich von 0,75 bis 2,0 mm liegt.

2. Bedachungssystem nach Anspruch 1, in welchem die Filamente aus anorganischen Fasern gebildet sind.

3. Bedachungssystem nach Anspruch 2, in welchem die anorganischen Fasern Glasfasern sind.

4. Bedachungssystem nach irgendeinem der Ansprüche 1 bis 3, in welchem die Öffnungsweite (d) zwischen den Garnsträngen (3) im Bereich von 1,0 bis 1,5 mm liegt.

5. Bedachungssystem nach irgendeinem vorhergehenden Anspruch, in welchem das Gewebe (2) und der Mineralfaser-Kern (1) miteinander durch ein Harz verbunden sind, das sowohl in das Gewebe (2) als auch den Oberflächenbereich (b) zumindest von dem Mineralfaser-Kern (1) eindringt.

6. Bedachungssystem nach Anspruch 5, in welchem das Gewebe (2) und der Mineralfaser-Kern (1) durch Kontaktieren des Gewebes (2) und eines Mineralfaserblocks, der in der Schleuderkammer aufgebrachtes, ungehärtetes Harz enthält, vor Härtung des Harzes im Härtungsofen vereint worden sind.

7. Verfahren zur Herstellung eines Bedachungssystems nach irgendeinem vorhergehenden Anspruch, in welchem eine Platte auf die Dachträger mit der Gewebeseite zuoberst gelegt wird, dann eine Klebstoff-Flüssigkeit auf die undurchlässige Bahn und/oder die Gewebeoberfläche aufgetragen wird und die undurchlässige Bahn so auf das Gewebe gelegt wird, daß beide anhaften, wobei der Klebstoff in das Gewebe eindringt, und man den Klebstoff verfestigen lässt.

8. Verfahren nach Anspruch 7, in welchem der Klebstoff ein härtbares Harz umfaßt.

9. Verfahren nach Anspruch 8, in welchem das härtbare Harz nur auf eine Oberfläche aufgebracht wird.

10. Verfahren nach Anspruch 7, in welchem der Klebstoff sein Haftvermögen durch Verdampfung eines Lösungsmittels/flüssigen Bindemittels entwickelt, wodurch der Klebstoff sich verfestigt oder geliert, und in welchem der flüssige Klebstoff zumindest auf das Gewebe aufgebracht wird.

11. Verfahren nach Anspruch 10, in welchem der Klebstoff ein Kontaktklebstoff ist und auf beide Oberflächen aufgebracht wird, man das Lösungsmittel verdampfen lässt und dann die mit Klebstoff beschichteten Oberflächen miteinander kontaktiert.

12. Verfahren nach irgendeinem der Ansprüche 7 bis 11, in welchem der flüssige Klebstoff eine Viskosität im Bereich von 500 bis 10.000 cP, gemessen bei 20°C, aufweist.

13. Verfahren nach Anspruch 12, in welchem die Viskosität im Bereich von 1.000 bis 5.000 cP liegt.

14. Verfahren nach irgendeinem der Ansprüche 7 bis 13, in welchem die Auftragmenge des Klebstoffs im Bereich von 100 bis 700 g/m² liegt.

## Revendications

1. Système de couverture de toit comprenant une âme en matériau isolant (1), un tissu (2) recouvrant l'âme et relié à l'âme par une résine pour former un panneau, et une feuille (4) imperméable à l'humidité et à l'eau recouvrant le tissu et étant reliée au panneau par un adhésif (5), **caractérisé en ce que** le matériau isolant est formé de fibres minérales et **en ce que** l'adhésif pénètre dans l'âme en fibres minérales, le tissu étant formé de rubans (3) tressés qui sont chacun formés de filaments, la taille des ouvertures entre les rubans étant comprise dans la plage de 0,75 à 2,0mm.

2. Système de couverture de toit selon la revendication 1, dans lequel les filaments sont formés de fibres minérales.

3. Système de couverture de toit selon la revendication 2, dans lequel les fibres minérales sont des fibres de verre.

4. Système de couverture de toit selon l'une quelconque des revendications 1 à 3, dans lequel la taille (d) des ouvertures situées entre les rubans (3) est comprise dans la plage de 1,0 à 1,5 mm.

5. Système de couverture de toit selon l'une quelconque des revendications précédentes, dans lequel le tissu (2) et l'âme (1) en fibres minérales sont reliés ensemble par une résine qui pénètre à la fois dans le tissu (2) et dans la région de surface (b) d'au moins l'âme (1) en fibres minérales.

6. Système de couverture de toit selon la revendication 5, dans lequel le tissu (2) et l'âme (1) en fibres minérales sont reliés en mettant en contact le tissu (2) et une plaque de fibres minérales contenant de la résine non durcie, appliquée dans la chambre de filage avant le durcissement de la résine dans le four de durcissement.

7. Procédé de production d'un système de couverture de toit selon l'une quelconque des revendications précédentes, dans lequel un panneau est déposé sur les supports de toit avec le côté du tissu vers le haut, un liquide adhésif étant alors appliqué sur la feuille imperméable et/ou sur la surface de tissu, et la feuille imperméable est posée au-dessus du tissu de telle sorte que les deux adhèrent mutuellement, l'adhésif pénétrant dans le tissu, et l'adhésif est solidifié.

8. Procédé selon la revendication 7, dans lequel l'adhésif comprend une résine durcissable.

9. Procédé selon la revendication 8, dans lequel la résine durcissable est appliquée sur une seule surface.

10. Procédé selon la revendication 7, dans lequel l'adhésif développe son adhérence par évaporation d'un solvant/véhicule liquide, l'adhésif solidifiant ou gélifiant, l'adhésif liquide étant appliqué au moins sur le tissu.

11. Procédé selon la revendication 10, dans lequel l'adhésif est un adhésif de contact et est appliqué sur les deux surfaces, les solvants sont évaporés et les surfaces revêtues d'adhésif sont mises en contact mutuel.

12. Procédé selon l'une quelconque des revendications 7 à 11, dans lequel l'adhésif liquide présente une viscosité, mesurée à 20 °C, comprise dans la plage de 500 à 10 000 cps.

13. Procédé selon la revendication 12, dans lequel la viscosité est comprise dans la plage de 1 000 à 5 000 cps.

14. Procédé selon l'une quelconque des revendications 7 à 13, dans lequel le taux d'application de l'adhésif est compris dans la plage de 100 à 700 g/m².
